# EUROPEAN PATENT APPLICATION

(11) **EP 3 036 995 A1**
(43) Date of publication of application: **29.06.2016**
(21) Application number: 15199500.8
(22) Date of filing: 11.12.2015
(51) Int. Cl.: A01N 43/653, A01P 3/00

(54) **USE OF AN ENANTIOENRICHED TRIAZOLE COMPOUND AS FUNGICIDE**

(30) Priority: 22.12.2014 EP 14199786
(71) Applicant: BASF SE, 67056 Ludwigshafen am Rhein (DE)
(72) Inventor: SEMAR, Martin, 76889 Gleiszellen-Gleishorbach (DE); MENGES, Frederik, 69198 Schriesheim (DE)
(74) Representative: BASF IP Association

(57) **Abstract**

Relates to a composition for controlling phytopathogenic fungi, comprising enantioenriched triazoles: 2-[4-(4-chlorophenoxy)-2-(trifluoromethyl)phenyl]-3-methyl-1-(1,2,4-triazol-1-yl)butan-2-ol, or 2-[4-(4-chlorophenoxy)-2- (trifluoromethyl)phenyl]-1 -(1,2,4-triazol-1-yl)propan-2-ol wherein in said compositions more of the (R)-enantiomer than the (S)-enantiomer is present.

## Description

The present invention relates to the (R)-enantiomer of 2-[4-(4-chlorophenoxy)-2-(trifluoromethyl)phenyl]-3-methyl-1-(1,2,4-triazol-1-yl)butan-2-ol and to its favorable use against particular pathogens set forth in the following description. The present invention also relates to the (R)-enantiomer of 2-[4-(4-chlorophenoxy)-2-(trifluoromethyl)phenyl]-1-(1,2,4-triazol-1-yl)propan-2-ol and to its favorable use against particular pathogens set forth in the following description.

2-[4-(4-chlorophenoxy)-2-(trifluoromethyl)phenyl]-3-methyl-1-(1,2,4-triazol-1-yl)butan-2-ol exists as (R)- and (S)-enantiomer. 2-[4-(4-chlorophenoxy)-2-(trifluoromethyl)phenyl]-1-(1,2,4-triazol-1-yl)propan-2-ol also exists as (R)- and (S)-enantiomer. Both are known from WO 2013/007767, where their synthesis and fungicidal activity is disclosed.

It is of interest, to find efficient uses and application forms of fungicidal compounds against pathogens of interest, in order to optimize the field of application of fungicidal compounds. Based on this, it was an object of the present invention to provide improved application forms and uses of 2-[4-(4-chlorophenoxy)-2-(trifluoromethyl)phenyl]-3-methyl-1-(1,2,4-triazol-1-yl)butan-2-ol. Further, it was another object of the present invention to provide improved application forms and uses of 2-[4-(4-chlorophenoxy)-2-(trifluoromethyl)phenyl]-1-(1,2,4-triazol-1-yl)propan-2-ol.

The first object is achieved by the use of an enantiomeric excess of (R)-2-[4-(4-chlorophenoxy)-2-(trifluoromethyl)phenyl]-3-methyl-1-(1,2,4-triazol-1-yl)butan-2-ol against phytopathogenic harmful fungi. Within the framework of the present invention, it has been found that the (R)-enantiomer of 2-[4-(4-chlorophenoxy)-2-(trifluoromethyl)phenyl]-3-methyl-1-(1,2,4-triazol-1-yl)butan-2-ol is more effective against certain pathogens than the (S)-enantiomer of 2-[4-(4-chlorophenoxy)-2-(trifluoromethyl)phenyl]-3-methyl-1-(1,2,4-triazol-1-yl)butan-2-ol. Therefore, the present invention relates to the use of more of the (R)-enantiomer than the (S)-enantiomer instead of using a racemic mixture. Furthermore, the present invention provides a composition for controlling phytopathogenic fungi, comprising 2-[4-(4-chlorophenoxy)-2-(trifluoromethyl)phenyl]-3-methyl-1-(1,2,4-triazol-1-yl)butan-2-ol, wherein more of the (R)-enantiomer than the (S)-enantiomer is present, and the uses of said compositions.

2-[4-(4-chlorophenoxy)-2-(trifluoromethyl)phenyl]-3-methyl-1-(1,2,4-triazol-1-yl)butan-2-ol (also called compound A in the following) contains one chiral center resulting in a (R)- and a (S)-enantiomer. Generally, compound A is obtained as racemate. The (R)- and (S)-enantiomers of the compound A can be obtained and isolated in pure form from the racemate of compound A with methods known by the skilled person, e.g. by using chiral HPLC. The synthesis of compound A isdescribed in WO 2013/007767. WO 2014/108286 and PCT/EP2014/076839 and EP 14176130.4 describe also processes for the synthesis of compound A.

Owing to the basic character of their nitrogen atoms, compounds A, namely the (R)-enantiomer of A as well as the (S)-enantiomer of (A), is capable of forming salts or adducts with inorganic or organic acids or with metal ions, in particular salts with inorganic acids or N-oxides. In each case, the respective N-oxide and the agriculturally acceptable salts are encompassed.

One embodiment of the invention is a composition for controlling phytopathogenic fungi, comprising 2-[4-(4-chlorophenoxy)-2-(trifluoromethyl)phenyl]-3-methyl-1-(1,2,4-triazol-1-yl)butan-2-ol, wherein more of the (R)-enantiomer than the (S)-enantiomer is present. Thus, in the inventive composition, the (R)-enantiomer of compound A is present with an enantiomeric excess (e.e.). In one embodiment thereof, the composition further comprises a solid and/or liquid agrochemical auxiliary. The inventive composition may comprise the (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 10%. According to a further embodiment, the (R)-enantiomer of compound A is present with an enantiomeric excess (e.e.) of at least 20%. According to still another embodiment, the (R)-enantiomer of compound A is present with an enantiomeric excess (e.e.) of at least 30%. According to still another embodiment, the (R)-enantiomer of compound A is present with an enantiomeric excess (e.e.) of at least at least 40%. According to still another embodiment, the (R)-enantiomer of compound A is present with an enantiomeric excess (e.e.) of at least 50%. According to still another embodiment, the (R)-enantiomer of compound A is present with an enantiomeric excess (e.e.) of at least 60%. According to still another embodiment, the (R)-enantiomer of compound A is present with an enantiomeric excess (e.e.) of at least 70%. According to still another embodiment, the (R)-enantiomer of compound A is present with an enantiomeric excess (e.e.) of at least 80%. It may be preferred if the enantiomeric excess of the (R)-enantiomer is at least 90%, also preferred at least 92%, at least 94%, at least 95%, at least 96% or at least 97%. It may be yet more preferred if the enantiomeric excess of the (R)-enantiomer is at least 98% or even at least 99%. It may be yet more preferred if the enantiomeric excess of the (R)-enantiomer is more than 99%, such as at least 99.5% or even at least 99.7%.Compound A may be provided and used as pure (R)-enantiomer or almost pure (R)-enantiomer, where essentially no (S)-enantiomer of compound A is contained. That means, at most traces of the (S)-enantiomer are present.

One embodiment relates to the use of the pure (R)-enantiomer of compound A, namely (R)-2-[4-(4-chlorophenoxy)-2-(trifluoromethyl)phenyl]-3-methyl-1-(1,2,4-triazol-1-yl)butan-2-ol, for controlling Puccinia spp. (rusts), in particular on cereals, such as, for example, wheat, barley or rye, more particularly on wheat. In one embodiment, the pure (R)-enantiomer is used for controlling Puccinia triticina (brown or leaf rust), in particular on cereals, such as, for example, wheat, barley or rye, more particularly on wheat. In another embodiment, the pure (R)-enantiomer is used for controlling Puccinia recondita (brown or leaf rust), in particular on cereals such as, for example, wheat, barley or rye, more particularly on wheat. In particular, the composition comprising the pure (R)-enantiomer of compound A is used.

A further embodiment relates to the use of more of (R)-2-[4-(4-chlorophenoxy)-2-(trifluoromethyl)phenyl]-3-methyl-1-(1,2,4-triazol-1-yl)butan-2-ol than (S)-2-[4-(4-chlorophenoxy)-2-(trifluoromethyl)phenyl]-3-methyl-1-(1,2,4-triazol-1-yl)butan-2-ol for controlling Puccinia spp. (rusts), in particular on cereals, such as, for example, wheat, barley or rye, more particularly on wheat. In one embodiment, more of the (R)-enantiomer than the (S)-enantiomer is used for controlling Puccinia triticina (brown or leaf rust), in particular on cereals, such as, for example, wheat, barley or rye, more particularly on wheat. In another embodiment, more of the (R)-enantiomer than the (S)-enantiomer is used for controlling Puccinia recondita (brown or leaf rust), in particular on cereals such as, for example, wheat, barley or rye, more particularly on wheat. In particular, the composition comprising more of the (R)-enantiomer than the (S)-enantiomer of compound A is used.

Still a further embodiment relates to the use of (R)-2-[4-(4-chlorophenoxy)-2-(trifluoromethyl)phenyl]-3-methyl-1-(1,2,4-triazol-1-yl)butan-2-ol, where essentially no (S)-enantiomer of compound A is present, for controlling Puccinia spp. (rusts), in particular on cereals, such as, for example, wheat, barley or rye, more particularly on wheat. In one embodiment, the (R)-enantiomer, being essentially free of the (S)-enantiomer, is used for controlling Puccinia triticina (brown or leaf rust), in particular on cereals, such as, for example, wheat, barley or rye, more particularly on wheat. In another embodiment, the (R)-enantiomer, being essentially free of the (S)-enantiomer, is used for controlling Puccinia recondita (brown or leaf rust), in particular on cereals such as, for example, wheat, barley or rye, more particularly on wheat. In particular, the composition comprising the (R)-enantiomer of compound A, and wherein the composition is essentially free of the (S)-enantiomer of compound A, is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 55 : 45 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 60 : 40 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 65 : 35 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 70 : 30 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 75 : 25 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 80 : 20 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 85 : 15 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of

(R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 90 : 10 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 91 : 9 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 92 : 8 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 93 : 7 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 94 : 6 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 95 : 5 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 96 : 4 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 97 : 3 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 98 : 2 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 99 : 1 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 10% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 20% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 30% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 40% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 50% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 60% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 70% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 80% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 90% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 92% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 94% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 95% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 96% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 97% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 98% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 99% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 99.5% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

A further embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 99.7% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound A is used.

Still a further embodiment relates to the use of the pure (R)-enantiomer of compound A, namely (R)-2-[4-(4-chlorophenoxy)-2-(trifluoromethyl)phenyl]-3-methyl-1-(1,2,4-triazol-1-yl)butan-2-ol, for controlling Blumeria graminis (powdery mildew), in particular on cereals, such as, for example, wheat or barley, more particularly on wheat. In particular, in this embodiment, the composition comprising the pure (R)-enantiomer of compound A is used.

Yet another embodiment relates to the use of more of (R)-2-[4-(4-chlorophenoxy)-2-(trifluoromethyl)phenyl]-3-methyl-1-(1,2,4-triazol-1-yl)butan-2-ol than (S)-2-[4-(4-chlorophenoxy)-2-(trifluoromethyl)phenyl]-3-methyl-1-(1,2,4-triazol-1-yl)butan-2-ol for controlling Blumeria graminis (powdery mildew), in particular on cereals, such as, for example, wheat or barley, more particularly on wheat. In particular, in this embodiment, the composition comprising more of the (R)-enantiomer than the (S)-enantiomer of compound A is used.

Still a further embodiment relates to the use of (R)-2-[4-(4-chlorophenoxy)-2-(trifluoromethyl)phenyl]-3-methyl-1-(1,2,4-triazol-1-yl)butan-2-ol, where essentially no (S)-enantiomer of compound A is present, for controlling Blumeria graminis (powdery mildew), in particular on cereals, such as, for example, wheat or barley, more particularly on wheat. In particular, in this embodiment, the composition comprising the (R)-enantiomer of compound A, and wherein the composition is essentially free of the (S)-enantiomer of compound A, is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 55 : 45 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 60 : 40 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 65 : 35 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 70 : 30 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 75 : 25 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 80 : 20 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

It may be also suitable to use a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 85 : 15 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 90 : 10 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 91 : 9 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 92 : 8 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 93 : 7 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 94 : 6 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 95 : 5 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 96 : 4 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 97 : 3 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 98 : 2 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 99 : 1 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 10% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 20% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 30% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 40% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 50% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 60% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 70% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 80% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 90% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

It may be also suitable to use (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 92% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 94% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 95% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 96% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 97% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 98% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 99% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 99.5% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

Yet another embodiment relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 99.7% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound A is used.

In another embodiment, the present invention relates to the use of the pure (R)-enantiomer of compound A, namely (R)-2-[4-(4-chlorophenoxy)-2-(trifluoromethyl)phenyl]-3-methyl-1-(1,2,4-triazol-1-yl)butan-2-ol, for controlling Septoria spp., in particular on cereals, more particularly on wheat. In one embodiment, the pure (R)-enantiomer is used for controlling Septoria tritici (Septoria blotch), in particular on wheat. In particular, the composition comprising the pure (R)-enantiomer of compound A is used.

In still another embodiment, the present invention relates to the use of more of (R)-2-[4-(4-chlorophenoxy)-2-(trifluoromethyl)phenyl]-3-methyl-1-(1,2,4-triazol-1-yl)butan-2-ol than (S)-2-[4-(4-chlorophenoxy)-2-(trifluoromethyl)phenyl]-3-methyl-1-(1,2,4-triazol-1-yl)butan-2-ol for controlling Septoria spp., in particular on cereals, more particularly on wheat. In one embodiment, the more of the (R)-enantiomer than the (S)-enantiomer is used for controlling Septoria tritici (Septoria blotch), in particular on wheat. In particular, the composition comprising more of the (R)-enantiomer than the (S)-enantiomer of compound A is used.

Still a further embodiment relates to the use of (R)-2-[4-(4-chlorophenoxy)-2-(trifluoromethyl)phenyl]-3-methyl-1-(1,2,4-triazol-1-yl)butan-2-ol, where essentially no (S)-enantiomer of compound A is present, for controlling Septoria spp., in particular on cereals, more particularly on wheat. In one embodiment, (R)-2-[4-(4-chlorophenoxy)-2-(trifluoromethyl)phenyl]-3-methyl-1-(1,2,4-triazol-1-yl)butan-2-ol, where essentially no (S)-enantiomer of compound A is contained, is used for controlling Septoria tritici (Septoria blotch), in particular on wheat. In particular, the composition comprising the (R)-enantiomer of compound A, and wherein the composition is essentially free of the (S)-enantiomer of compound A, is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 55 : 45 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 60 : 40 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 65 : 35 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 70 : 30 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 75 : 25 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 80 : 20 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 85 : 15 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 90 : 10 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 91 : 9 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 92 : 8 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 93 : 7 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 94 : 6 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 95 : 5 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 96 : 4 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 97 : 3 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 98 : 2 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of a ratio of (R)-2-[4-(4-chlorophenoxy)-2-(trifluoromethyl)phenyl]-3-methyl-1-(1,2,4-triazol-1-yl)butan-2-ol to (S)-2-[4-(4-chlorophenoxy)-2-(trifluoromethyl)phenyl]-3-methyl-1-(1,2,4-triazol-1-yl)butan-2-ol (R : S) of 99 : 1 for controlling Septoria spp., in particular on cereals, more particularly on wheat. In one embodiment, this ration of (R)-enantiomer to (S)-enantiomer is used for controlling Septoria tritici (Septoria blotch), in particular on wheat. In particular, the composition comprising this ratio of the (R)-enantiomer to the (S)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 10% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 20% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 30% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 40% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 50% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 60% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 70% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 80% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 90% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 92% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 94% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 95% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 96% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 97% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 98% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 99% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 99.5% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

In still another embodiment, the present invention relates to the use of (R)-2-[4-(4-chlorophenoxy)-2-(trifluoromethyl)phenyl]-3-methyl-1-(1,2,4-triazol-1-yl)butan-2-ol with an enantiomeric excess (e.e.) of at least 99.7% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound A is used.

The uses described above are also meant to encompass the respective method for combating the respective phytopathogenic fungi, comprising treating the fungi or the materials, plants, the soil or plant propagation materials, in particular seeds, to be protected against fungal attack with an effective amount of the pure (R)-enantiomer, the respective ratio of enantiomers or the respective enantiomeric excess of the (R)-enantiomer of compound A, respectively. In particular, in this embodiment, the composition comprising the pure (R)-enantiomer, the respective ratio of enantiomers or the respective enantiomeric excess of the (R)-enantiomer of compound A, respectively, is used in the methods.

For the uses of compound A in any of the enantiomeric compositions as detailed above, pesticidal or agrochemical compositions may be used, comprising a liquid and/or solid carrier and the respective triazole as described above.

An agrochemical composition comprises a fungicidally effective amount of the respective active ingredients. The term "effective amount" denotes an amount of the respective triazole which is sufficient for controlling the respective harmful fungi on cultivated plants and which does not result in a substantial damage to the treated plants. Such an amount can vary in a broad range and is dependent on various factors, such as the fungal species to be controlled, the treated cultivated plant or material, the climatic conditions and the specific triazole used.

For the described uses and methods, the compound A in the above detailed enantiomeric ratios can be converted into customary types of agrochemical compositions, e. g. solutions, emulsions, suspensions, dusts, powders, pastes, granules, pressings, capsules, and mixtures thereof. Examples for composition types are suspensions (e. g. SC, OD, FS), emulsifiable concentrates (e. g. EC), emulsions (e. g. EW, EO, ES, ME), capsules (e. g. CS, ZC), pastes, pastilles, wettable powders or dusts (e. g. WP, SP, WS, DP, DS), pressings (e. g. BR, TB, DT), granules (e. g. WG, SG, GR, FG, GG, MG), insecticidal articles (e. g. LN), as well as gel formulations for the treatment of plant propagation materials such as seeds (e. g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

### Structures:

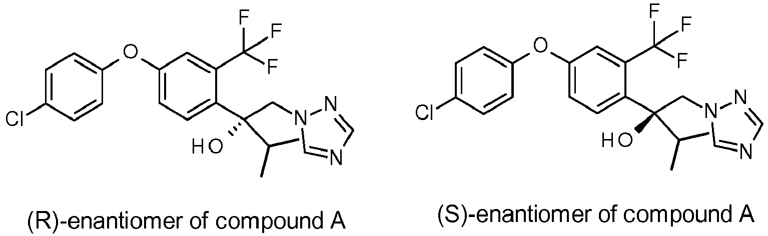

The second object is achieved by the use of an enantiomeric excess of (R)-2-[4-(4-chlorophenoxy)-2-(trifluoromethyl)phenyl]-1-(1,2,4-triazol-1-yl)propan-2-ol against phytopathogenic harmful fungi. Within the framework of the present invention, it has been found that the (R)-enantiomer of 2-[4-(4-chlorophenoxy)-2-(trifluoromethyl)phenyl]-1-(1,2,4-triazol-1-yl)propan-2-ol is more effective against certain pathogens than the (S)-enantiomer of 2-[4-(4-chlorophenoxy)-2-(trifluoromethyl)phenyl]-1-(1,2,4-triazol-1-yl)propan-2-ol. Therefore, the present invention relates to the use of more of the (R)-enantiomer than the (S)-enantiomer instead of using a racemic mixture. Furthermore, the present invention provides a composition for controlling phytopathogenic fungi, comprising 2-[4-(4-chlorophenoxy)-2-(trifluoromethyl)phenyl]-1-(1,2,4-triazol-1-yl)propan-2-ol, wherein more of the (R)-enantiomer than the (S)-enantiomer is present, and the uses of said compositions.

2-[4-(4-chlorophenoxy)-2-(trifluoromethyl)phenyl]-1-(1,2,4-triazol-1-yl)propan-2-ol (also called compound B in the following) contains one chiral center resulting in a (R)- and a (S)-enantiomer. Generally, compound B is obtained as racemate. The (R)- and (S)-enantiomers of the compound B can be obtained and isolated in pure form from the racemate of compound B with methods known by the skilled person, e.g. by using chiral HPLC. The synthesis of compound B isdescribed in WO 2013/007767. WO 2014/108286 and PCT/EP2014/076839 and EP 14176130.4 describe also processes for the synthesis of compound B.

Owing to the basic character of their nitrogen atoms, compounds B, namely the (R)-enantiomer of B as well as the (S)-enantiomer of (B), is capable of forming salts or adducts with inorganic or organic acids or with metal ions, in particular salts with inorganic acids or N-oxides. In each case, the respective N-oxide and the agriculturally acceptable salts are encompassed.

One embodiment of the invention is a composition for controlling phytopathogenic fungi, comprising 2-[4-(4-chlorophenoxy)-2-(trifluoromethyl)phenyl]-1-(1,2,4-triazol-1-yl)propan-2-ol, wherein more of the (R)-enantiomer than the (S)-enantiomer is present. Thus, in the inventive composition, the (R)-enantiomer of compound B is present with an enantiomeric excess (e.e.). In one embodiment thereof, the composition further comprises a solid and/or liquid agrochemical auxiliary. The inventive composition may comprise the (R)-2-[4-(4-chlorophenoxy)-2-(trifluoromethyl)phenyl]-1-(1,2,4-triazol-1-yl)propan-2-ol with an enantiomeric excess (e.e.) of at least 10%. According to a further embodiment, the (R)-enantiomer of compound B is present with an enantiomeric excess (e.e.) of at least 20%. According to still another embodiment, the (R)-enantiomer of compound B is present with an enantiomeric excess (e.e.) of at least 30%. According to still another embodiment, the (R)-enantiomer of compound B is present with an enantiomeric excess (e.e.) of at least at least 40%. According to still another embodiment, the (R)-enantiomer of compound B is present with an enantiomeric excess (e.e.) of at least 50%. According to still another embodiment, the (R)-enantiomer of compound B is present with an enantiomeric excess (e.e.) of at least 60%. According to still another embodiment, the (R)-enantiomer of compound B is present with an enantiomeric excess (e.e.) of at least 70%. According to still another embodiment, the (R)-enantiomer of compound B is present with an enantiomeric excess (e.e.) of at least 80%. It may be preferred if the enantiomeric excess of the (R)-enantiomer is at least 90%, also preferred at least 92%, at least 94%, at least 95%, at least 96% or at least 97%. It may be yet more preferred if the enantiomeric excess of the (R)-enantiomer is at least 98% or even at least 99%. It may be yet more preferred if the enantiomeric excess of the (R)-enantiomer is more than 99%, such as at least 99.5% or even at least 99.7%.Compound B may be provided and used as pure (R)-enantiomer or almost pure (R)-enantiomer, where essentially no (S)-enantiomer of compound B is contained. That means, at most traces of the (S)-enantiomer are present.

One embodiment relates to the use of the pure (R)-enantiomer of compound B, namely (R)-2-[4-(4-chlorophenoxy)-2-(trifluoromethyl)phenyl]-1-(1,2,4-triazol-1-yl)propan-2-ol, for controlling Puccinia spp. (rusts), in particular on cereals, such as, for example, wheat, barley or rye, more particularly on wheat. In one embodiment, the pure (R)-enantiomer is used for controlling Puccinia triticina (brown or leaf rust), in particular on cereals, such as, for example, wheat, barley or rye, more particularly on wheat. In another embodiment, the pure (R)-enantiomer is used for controlling Puccinia recondita (brown or leaf rust), in particular on cereals such as, for example, wheat, barley or rye, more particularly on wheat. In particular, the composition comprising the pure (R)-enantiomer of compound B is used.

A further embodiment relates to the use of more of (R)-2-[4-(4-chlorophenoxy)-2-(trifluoromethyl)phenyl]-1-(1,2,4-triazol-1-yl)propan-2-ol than (S)-2-[4-(4-chlorophenoxy)-2-(trifluoromethyl)phenyl]-1-(1,2,4-triazol-1-yl)propan-2-ol for controlling Puccinia spp. (rusts), in particular on cereals, such as, for example, wheat, barley or rye, more particularly on wheat. In one embodiment, more of the (R)-enantiomer than the (S)-enantiomer is used for controlling Puccinia triticina (brown or leaf rust), in particular on cereals, such as, for example, wheat, barley or rye, more particularly on wheat. In another embodiment, more of the (R)-enantiomer than the (S)-enantiomer is used for controlling Puccinia recondita (brown or leaf rust), in particular on cereals such as, for example, wheat, barley or rye, more particularly on wheat. In particular, the composition comprising more of the (R)-enantiomer than the (S)-enantiomer of compound B is used.

Still a further embodiment relates to the use of (R)-2-[4-(4-chlorophenoxy)-2-(trifluoromethyl)phenyl]-1-(1,2,4-triazol-1-yl)propan-2-ol, where essentially no (S)-enantiomer of compound B is present, for controlling Puccinia spp. (rusts), in particular on cereals, such as, for example, wheat, barley or rye, more particularly on wheat. In one embodiment, the (R)-enantiomer, being essentially free of the (S)-enantiomer, is used for controlling Puccinia triticina (brown or leaf rust), in particular on cereals, such as, for example, wheat, barley or rye, more particularly on wheat. In another embodiment, the (R)-enantiomer, being essentially free of the (S)-enantiomer, is used for controlling Puccinia recondita (brown or leaf rust), in particular on cereals such as, for example, wheat, barley or rye, more particularly on wheat. In particular, the composition comprising the (R)-enantiomer of compound B, and wherein the composition is essentially free of the (S)-enantiomer of compound B, is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 55 : 45 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 60 : 40 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 65 : 35 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 70 : 30 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of

(R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 75 : 25 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 80 : 20 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 85 : 15 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 90 : 10 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 91 : 9 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 92 : 8 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 93 : 7 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 94 : 6 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 95 : 5 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 96 : 4 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 97 : 3 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 98 : 2 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 99 : 1 for controlling Puccinia spp. (rusts), in particular on cereals, such as, for example, wheat, barley or rye, more particularly on wheat. In one embodiment, this ratio of (R)-enantiomer to (S)-enantiomer is used for controlling Puccinia triticina (brown or leaf rust), in particular on cereals, such as, for example, wheat, barley or rye, more particularly on wheat. In another embodiment, this ratio of (R)-enantiomer to (S)-enantiomer is used for controlling Puccinia recondita (brown or leaf rust), in particular on cereals such as, for example, wheat, barley or rye, more particularly on wheat. In particular, the composition comprising this ratio of the (R)-enantiomer to the (S)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 10% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 20% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 30% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 40% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 50% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 60% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 70% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 80% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 90% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 92% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 94% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 95% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 96% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 97% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 98% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 99% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 99.5% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

A further embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 99.7% for controlling Puccinia spp. (rusts), in particular on cereals, such as, for example, wheat, barley or rye, more particularly on wheat. In one embodiment, this enantiomeric excess of the (R)-enantiomer is used for controlling Puccinia triticina (brown or leaf rust), in particular on cereals, such as, for example, wheat, barley or rye, more particularly on wheat. In another embodiment, this enantiomeric excess of the (R)-enantiomer is used for controlling Puccinia recondita (brown or leaf rust), in particular on cereals such as, for example, wheat, barley or rye, more particularly on wheat. In particular, the composition comprising this enantiomeric excess of the (R)-enantiomer of compound B is used.

Still a further embodiment relates to the use of the pure (R)-enantiomer of compound B, namely (R)-2-[4-(4-chlorophenoxy)-2-(trifluoromethyl)phenyl]-1-(1,2,4-triazol-1-yl)propan-2-ol, for controlling Blumeria graminis (powdery mildew), in particular on cereals, such as, for example, wheat or barley, more particularly on wheat. In particular, in this embodiment, the composition comprising the pure (R)-enantiomer of compound B is used.

Yet another embodiment relates to the use of more of (R)-2-[4-(4-chlorophenoxy)-2-(trifluoromethyl)phenyl]-1-(1,2,4-triazol-1-yl)propan-2-ol than (S)-2-[4-(4-chlorophenoxy)-2-(trifluoromethyl)phenyl]-1-(1,2,4-triazol-1-yl)propan-2-ol for controlling Blumeria graminis (powdery mildew), in particular on cereals, such as, for example, wheat or barley, more particularly on wheat. In particular, in this embodiment, the composition comprising more of the (R)-enantiomer than the (S)-enantiomer of compound B is used.

Still a further embodiment relates to the use of (R)-2-[4-(4-chlorophenoxy)-2-(trifluoromethyl)phenyl]-1-(1,2,4-triazol-1-yl)propan-2-ol, where essentially no (S)-enantiomer of compound B is present, for controlling Blumeria graminis (powdery mildew), in particular on cereals, such as, for example, wheat or barley, more particularly on wheat. In particular, in this embodiment, the composition comprising the (R)-enantiomer of compound B, and wherein the composition is essentially free of the (S)-enantiomer of compound B, is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 55 : 45 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 60 : 40 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 65 : 35 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 70 : 30 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 75 : 25 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 80 : 20 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

It may be also suitable to use a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 85 : 15 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 90 : 10 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 91 : 9 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 92 : 8 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 93 : 7 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 94 : 6 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 95 : 5 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 96 : 4 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 97 : 3 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 98 : 2 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 99 : 1 for controlling Blumeria graminis (powdery mildew), in particular on cereals, such as, for example, wheat or barley, more particularly on wheat. In particular, in this embodiment, the composition comprising this ratio of the (R)-enantiomer to the (S)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 10% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 20% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 30% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 40% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used. Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 50% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 60% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 70% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 80% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 90% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

It may be also suitable to use (R)-2-[4-(4-chlorophenoxy)-2-(trifluoromethyl)phenyl]-1-(1,2,4-triazol-1-yl)propan-2-ol with an enantiomeric excess (e.e.) of at least 92% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 94% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 95% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used. Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 96% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 97% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 98% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 99% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 99.5% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

Yet another embodiment relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 99.7% for controlling Blumeria graminis (powdery mildew), in particular on cereals, such as, for example, wheat or barley, more particularly on wheat. In particular, in this embodiment, the composition comprising this enantiomeric excess of the (R)-enantiomer of compound B is used.

In another embodiment, the present invention relates to the use of the pure (R)-enantiomer of compound B, namely (R)-2-[4-(4-chlorophenoxy)-2-(trifluoromethyl)phenyl]-1-(1,2,4-triazol-1-yl)propan-2-ol, for controlling Septoria spp., in particular on cereals, more particularly on wheat. In one embodiment, the pure (R)-enantiomer is used for controlling Septoria tritici (Septoria blotch), in particular on wheat. In particular, the composition comprising the pure (R)-enantiomer of compound B is used.

In still another embodiment, the present invention relates to the use of more of (R)-2-[4-(4-chlorophenoxy)-2-(trifluoromethyl)phenyl]-1-(1,2,4-triazol-1-yl)propan-2-ol than (S)-2-[4-(4-chlorophenoxy)-2-(trifluoromethyl)phenyl]-1-(1,2,4-triazol-1-yl)propan-2-ol for controlling Septoria spp., in particular on cereals, more particularly on wheat. In one embodiment, the more of the (R)-enantiomer than the (S)-enantiomer is used for controlling Septoria tritici (Septoria blotch), in particular on wheat. In particular, the composition comprising more of the (R)-enantiomer than the (S)-enantiomer of compound B is used.

Still a further embodiment relates to the use of (R)-2-[4-(4-chlorophenoxy)-2-(trifluoromethyl)phenyl]-1-(1,2,4-triazol-1-yl)propan-2-ol, where essentially no (S)-enantiomer of compound B is present, for controlling Septoria spp., in particular on cereals, more particularly on wheat. In one embodiment, (R)-2-[4-(4-chlorophenoxy)-2-(trifluoromethyl)phenyl]-1-(1,2,4-triazol-1-yl)propan-2-ol, where essentially no (S)-enantiomer of compound B is contained, is used for controlling Septoria tritici (Septoria blotch), in particular on wheat. In particular, the composition comprising the (R)-enantiomer of compound B, and wherein the composition is essentially free of the (S)-enantiomer of compound B, is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 55 : 45 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 60 : 40 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 65 : 35 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 70 : 30 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 75 : 25 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 80 : 20 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 85 : 15 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 90 : 10 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 91 : 9 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 92 : 8 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 93 : 7 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 94 : 6 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 95 : 5 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 96 : 4 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 97 : 3 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 98 : 2 for controlling Septoria spp., in particular on cereals, more particularly on wheat. In one embodiment, this ratio of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of a ratio of (R)-2-[4-(4-chlorophenoxy)-2-(trifluoromethyl)phenyl]-1-(1,2,4-triazol-1-yl)propan-2-ol to (S)-2-[4-(4-chlorophenoxy)-2-(trifluoromethyl)phenyl]-1-(1,2,4-triazol-1-yl)propan-2-ol (R : S) of 99 : 1 for controlling Septoria spp., in particular on cereals, more particularly on wheat. In one embodiment, this ration of (R)-enantiomer to (S)-enantiomer is used for controlling Septoria tritici (Septoria blotch), in particular on wheat. In particular, the composition comprising this ratio of the (R)-enantiomer to the (S)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 10% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 20% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 30% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 40% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 50% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 60% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 70% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 80% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 90% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 92% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 94% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 95% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 96% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 97% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 98% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 99% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 99.5% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

In still another embodiment, the present invention relates to the use of (R)-2-[4-(4-chlorophenoxy)-2-(trifluoromethyl)phenyl]-1-(1,2,4-triazol-1-yl)propan-2-ol with an enantiomeric excess (e.e.) of at least 99.7% for controlling Septoria spp., in particular on cereals, more particularly on wheat. In one embodiment, this enantiomeric excess of the (R)-enantiomer is used for controlling Septoria tritici (Septoria blotch), in particular on wheat. In particular, the composition comprising this enantiomeric excess of the (R)-enantiomer of compound B is used.

The uses described above are also meant to encompass the respective method for combating the respective phytopathogenic fungi, comprising treating the fungi or the materials, plants, the soil or plant propagation materials, in particular seeds, to be protected against fungal attack with an effective amount of the pure (R)-enantiomer, the respective ratio of enantiomers or the respective enantiomeric excess of the (R)-enantiomer of compound B, respectively. In particular, in this embodiment, the composition comprising the pure (R)-enantiomer, the respective ratio of enantiomers or the respective enantiomeric excess of the (R)-enantiomer of compound B, respectively, is used in the methods.

For the uses of compound B in any of the enantiomeric compositions as detailed above, pesticidal or agrochemical compositions may be used, comprising a liquid and/or solid carrier and the respective triazole as described above.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

An agrochemical composition comprises a fungicidally effective amount of the respective active ingredients. The term "effective amount" denotes an amount of the respective triazole which is sufficient for controlling the respective harmful fungi on cultivated plants and which does not result in a substantial damage to the treated plants. Such an amount can vary in a broad range and is dependent on various factors, such as the fungal species to be controlled, the treated cultivated plant or material, the climatic conditions and the specific triazole used.

For the described uses and methods, the compound B in the above detailed enantiomeric ratios can be converted into customary types of agrochemical compositions, e. g. solutions, emulsions, suspensions, dusts, powders, pastes, granules, pressings, capsules, and mixtures thereof. Examples for composition types are suspensions (e. g. SC, OD, FS), emulsifiable concentrates (e. g. EC), emulsions (e. g. EW, EO, ES, ME), capsules (e. g. CS, ZC), pastes, pastilles, wettable powders or dusts (e. g. WP, SP, WS, DP, DS), pressings (e. g. BR, TB, DT), granules (e. g. WG, SG, GR, FG, GG, MG), insecticidal articles (e. g. LN), as well as gel formulations for the treatment of plant propagation materials such as seeds (e. g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

### Structures:

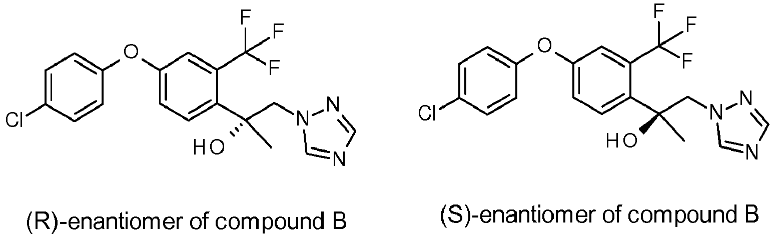

The fungicidal action of the compounds of the formula I was demonstrated by the following experiments:
A) Greenhouse tests
   The active substances were formulated separately or together as a stock solution comprising 25 mg of active substance which was made up to 10 ml using a mixture of acetone and/or DMSO and the emulsifier Wettol EM 31^{®} (wetting agent having emulsifying and dispersing action based on ethoxylated alkylphenols) in a volume ratio of solvent/emulsifier of 99 to 1. This solution was then made up to 100 ml using water.
B) Microtiter tests
   The active compounds were formulated separately as a stock solution having a concentration of 10000 ppm in dimethyl sulfoxide. The stock solutions were mixed according to the ratio, pipetted onto a micro titer plate (MTP) and diluted with water to the desired concentrations. A spore suspension of the fungal pathogen in an aqueous biomalt or yeast-bactopeptone-sodiumacetate solution was then added. The plates were placed in a water vapor-saturated chamber at a temperature of 18°C. Using an absorption photometer, the MTPs were measured at 405 nm 7 days after the inoculation.

## Claims

1. A composition for controlling phytopathogenic fungi, comprising 2-[4-(4-chlorophenoxy)-2-(trifluoromethyl)phenyl]-3-methyl-1-(1,2,4-triazol-1-yl)butan-2-ol, wherein more of the (R)-enantiomer than the (S)-enantiomer is present.

2. A composition for controlling phytopathogenic fungi, comprising 2-[4-(4-chlorophenoxy)-2-(trifluoromethyl)phenyl]-1-(1,2,4-triazol-1-yl)propan-2-ol, wherein more of the (R)-enantiomer than the (S)-enantiomer is present.

3. The composition of claim 1 or 2, further comprising a solid and/or liquid agrochemical auxiliary.

4. The composition of claim 1 or 3, wherein 2-[4-(4-chlorophenoxy)-2-(trifluoromethyl)phenyl]-3-methyl-1-(1,2,4-triazol-1-yl)butan-2-ol is present with an enantiomeric excess (e.e.) of at least 10%.

5. The composition of claim 2 or 3, wherein 2-[4-(4-chlorophenoxy)-2-(trifluoromethyl)phenyl]-1-(1,2,4-triazol-1-yl)propan-2-ol is present with an enantiomeric excess (e.e.) of at least 10%.

6. A use of a composition according to any one of claims 1 to 5 for controlling phytopathogenic fungi.

7. The use of claim 6, wherein the phytopathogenic fungi is Puccinia spp.

8. The use of claim 6, wherein the phytopathogenic fungi is Blumeria graminis.

9. The use of claim 6, wherein the phytopathogenic fungi is Septoria spp.

10. The use of any one of claims 6 to 9, for controlling phytopathogenic fungi on wheat.

11. A method for combating phytopathogenic fungi, comprising treating the fungi or the materials, plants, the soil or seeds to be protected against fungal attack with an effective amount of a composition as defined in any one of the claims 1 to 5.

12. The method of claim 11, wherein the phytopathogenic fungi is Puccinia spp.

13. The method of claim 11, wherein the phytopathogenic fungi is Blumeria graminis.

14. The method of claim 11, wherein the phytopathogenic fungi is Septoria spp.

15. The method of any one of claims 11 to 14, for controlling phytopathogenic fungi on wheat.
